# EUROPEAN PATENT APPLICATION

(11) **EP 4 170 601 A1**
(43) Date of publication of application: **26.04.2023**
(21) Application number: 22201576.0
(22) Date of filing: 14.10.2022
(51) Int. Cl.: G06V 10/46, G06V 20/56, G06T 7/00

(54) **TRAFFIC MARKER DETECTION METHOD AND TRAINING METHOD FOR TRAFFIC MARKER DETECTION MODEL**

(30) Priority: 25.10.2021 CN 202111243057
(71) Applicant: Beijing Tusen Zhitu Technology Co., Ltd., Beijing 100016 (CN)
(72) Inventor: SHEN, Zhenwei, Beijing, 100016 (CN); HUANG, Zehao, Beijing, 100016 (CN); WANG, Naiyan, Beijing, 100016 (CN)
(74) Representative: Murgitroyd & Company

(57) **Abstract**

The present disclosure relates to a traffic marker detection method and a training method for a traffic marker detection model, and relates to the technical field of intelligent transportation, and particularly to autonomous driving technology. The traffic marker detection method comprises acquiring a target image containing a traffic marker; and inputting the target image into a traffic marker detection model to obtain a detection mark corresponding to the traffic marker; wherein the detection mark comprises at least one of a detection point and a detection line for characterizing a position of the traffic marker in the target image.

## Description

The present disclosure claims priority to Chinese patent application No. 202111243057.0, titled "TRAFFIC MARKER DETECTION METHOD AND TRAINING METHOD FOR TRAFFIC MARKER DETECTION MODEL", filed on October 25, 2021.

### TECHNICAL FIELD

The present disclosure relates to the field of intelligent traffic, and to autonomous driving technology, and more particularly to a traffic marker detection method, a training method and a device for and traffic marker detection model, an electronic apparatus, a computer-readable storage medium, and a computer program product.

### BACKGROUND

Traffic markers, such as traffic cones, are often present on roads as road isolation warning facilities. Autonomous vehicles need to have the ability to detect traffic markers in real time.

The methods described in this section are not necessarily methods that have been previously conceived or proposed. Unless otherwise indicated, it should not be assumed that any of the methods described in this section are considered prior art merely by virtue of their inclusion in this section. Similarly, the problems mentioned in this section should not be considered to have been acknowledged in any prior art unless otherwise indicated.

### SUMMARY

According to one aspect of the present disclosure, there is provided a traffic marker detection method comprising: acquiring a target image containing a traffic marker; and inputting the target image into a traffic marker detection model to obtain a detection mark corresponding to the traffic marker; wherein the detection mark comprises at least one of a detection point and a detection line for characterizing a position of the traffic marker in the target image.

According to another aspect of the present disclosure, there is provided a training method for a traffic marker detection model, comprising: acquiring a training image and a labeled image corresponding to the training image, wherein the training image comprises a traffic marker, the labeled image comprises a labeled mark corresponding to the traffic marker in the training image, the labeled mark is used for marking the position of the traffic marker in the corresponding training image, and the labeled mark comprises at least one of a labeled point and a labeled line; inputting the training image into a traffic marker detection model to obtain a predicted mark of the traffic marker in the training image; and training the traffic marker detection model based on the predicted mark of the training image and the labeled mark of the corresponding labeled image.

According to another aspect of the present disclosure, there is provided a traffic marker detection device comprising: an image acquisition unit configured for acquiring a target image containing a traffic marker; and a detection unit configured for inputting the target image into a traffic marker detection model to obtain a detection mark corresponding to the traffic marker; wherein the detection mark comprises a detection point for characterizing a position of the traffic marker in the target image, and the detection mark comprises at least one of the detection point and a detection line.

According to another aspect of the present disclosure, there is provided a device for training a traffic marker detection model, comprising: a first acquisition unit configured for acquiring a training image and a labeled image corresponding to the training image, wherein the training image comprises a traffic marker, the labeled image comprises a labeled mark corresponding to the traffic marker in the training image, the labeled mark is used for marking the position of the traffic marker in the corresponding training image, and the labeled mark comprises at least one of a labeled point and a labeled line; a model prediction unit configured for inputting the training image into a traffic marker detection model to obtain a predicted mark corresponding to the traffic marker in the training image; and a model training unit configured for training the traffic marker detection model based on the predicted mark of the training image and the labeled mark of the corresponding labeled image.

According to another aspect of the present disclosure, there is provided an electronic apparatus comprising: at least one processor; and a storage communicatively connected with the at least one processor; wherein the storage stores instructions that, when executed by the at least one processor, cause the at least one processor to perform the methods of the present disclosure.

According to another aspect of the present disclosure, there is provided a non-transitory computer-readable storage medium storing computer instructions, wherein the computer instructions are used for enabling the computer to perform the method of the present disclosure.

According to another aspect of the present disclosure, there is provided a computer program product comprising a computer program which, when executed by a processor, implements the method of the present disclosure.

According to another aspect of the present disclosure, there is provided a vehicle including the electronic apparatus as previously described.

According to one or more embodiments of the present disclosure, by inputting a target image containing a traffic marker to a traffic marker detection model, a detection point or detection line corresponding to the traffic marker is obtained, so that the detection of the traffic marker on a road can be achieved regardless of the form in which the traffic marker appears and regardless of how far away from an image acquisition device on a vehicle to acquire the target image.

It should be understood that the content in this section is not intended to identify key or critical features of the embodiments of the disclosure, nor is it intended to limit the scope of the disclosure. Other features of the disclosure will become readily apparent from the following description.

### BRIEF DESCRIPTION OF THE DRAWINGS

The accompanying drawings, which are incorporated in and constitute a part of this description, illustrate embodiments and, together with the description, serve to explain exemplary implementation methods of the embodiments. The illustrated embodiments are for illustrative purposes only and do not limit the scope of the claims. Throughout the drawings, the same reference numerals indicate similar, but not necessarily identical, elements.
Fig. 1 is a schematic view of an application scenario according to an exemplary embodiment;
Fig. 2 is a flowchart of a traffic marker detection method according to an embodiment of the present disclosure;
Fig. 3 is a schematic view of an image containing a traffic marker according to an embodiment of the present disclosure;
Fig. 4 is a flowchart illustrating a process of inputting a target image to a traffic marker detection model to obtain a detection mark corresponding to a traffic marker in a traffic marker detection method according to an embodiment of the present disclosure;
Fig. 5 is a flowchart of a training method for a traffic marker detection model according to an embodiment of the present disclosure;
Fig. 6 is a schematic diagram of a labeled image according to an embodiment of the present disclosure;
Fig. 7 is a flowchart illustrating a process of training a traffic marker detection model based on a predicted mark of a training image and a labeled mark of a labeled image in a training method for the traffic marker detection model according to an embodiment of the present disclosure;
Fig. 8 is an exemplary block diagram of a traffic marker detection device according to an embodiment of the present disclosure;
Fig. 9 is an exemplary block diagram of a training device for a traffic marker detection model according to an embodiment of the present disclosure; and
Fig. 10 is a block diagram illustrating an exemplary computing apparatus that can be applied to an exemplary embodiment.

### DETAILED DESCRIPTION

The following describes exemplary embodiments of the disclosure with reference to the accompanying drawings, which comprise various details of the embodiments of the disclosure to facilitate understanding, and should be considered as merely exemplary. Accordingly, one of ordinary skill in the art should appreciate that various changes and modifications can be made to the embodiments described herein without departing from the scope of the disclosure. Also, descriptions of well-known functions and constructions are omitted from the following description for clarity and conciseness.

In this disclosure, the use of the terms "first", "second", and the like to describe various elements is not intended to limit the positional, timing, or importance relationships of the elements unless otherwise indicated, and such terms are used solely to distinguish one element from another. In some instances, a first element and a second element may refer to the same instance of the element. In some cases, they may refer to different instances based on the context.

The terminology used in the description of the various illustrated examples in this disclosure is for the purpose of describing particular examples only and is not intended to be limiting. Unless the context clearly indicates otherwise, if the number of an element is not expressly limited, the element can be one or more. Furthermore, the term "and/or" as used in this disclosure encompasses any and all possible combinations of the listed items.

Embodiments of the present disclosure provide a new traffic marker detection method and a training method for a traffic marker detection model. The principles of the present disclosure will hereinafter be described in conjunction with the appended drawings.

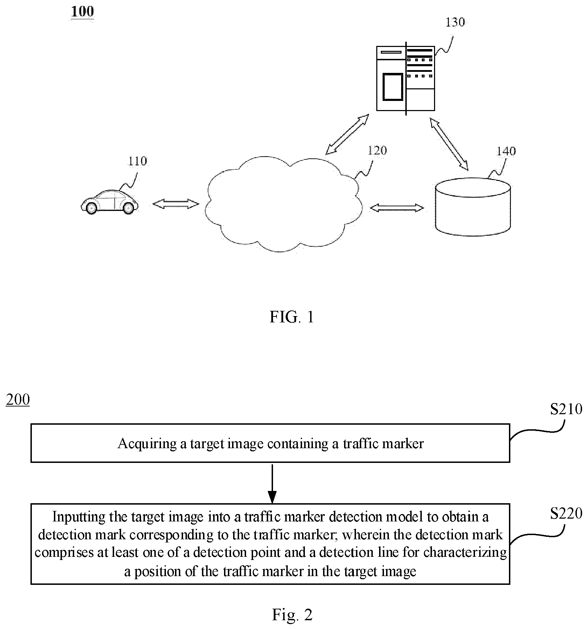

Fig. 1 illustrates a schematic diagram of an application scenario 100 according to an exemplary embodiment. As shown in Fig. 1, the application scenario 100 may comprise a vehicle 110 (such as a vehicle shown in Fig. 1), a network 120, a server 130, and a database 140. Here, the vehicle 110 may be equipped with an electronic system for autonomous driving.

The vehicle 110 may be coupled with an image acquisition device to acquire image data on a road, wherein the image data comprises a target image containing a traffic marker. The vehicle 110 may be an autonomous vehicle, such as an autonomous driving truck.

The vehicle 110 may further comprise a communication unit, and may transmit the target image to the server 130 via the network 120, and perform the traffic marker detection method provided herein by the server 130.

In some implementations, the server 130 may perform a traffic marker detection method provided herein using an application program built into the server. In other implementations, the server 130 may perform a traffic marker detection method provided herein by invoking an application program stored externally to the server.

The network 120 may be a single network, or a combination of at least two different networks. For example, the network 120 may comprise, but is not limited to, one or a combination of local area networks, wide area networks, public networks, private networks, and the like.

The server 130 may be built into the vehicle 110 as a vehicle-mounted server of the vehicle 110. It may also be a peripheral apparatus separate from the vehicle 110 for remotely servicing the vehicle 110. The server 130 may be a single server, or a group of servers, each server within the group being connected via a wired or wireless network. A server group may be centralized, such as a data center, or distributed. The server 130 may be local or remote.

The database 140 may generally refer to a device having storage capabilities. The database 140 is mainly used to store various data utilized, generated and outputted from the operation of the vehicle 110 and the server 130. The database 140 may be local or remote. The database 140 may comprise various storages, such as Random Access Memory (RAM), Read-Only Memory (ROM), etc. The above-mentioned storage devices are only a few examples, and the storage devices that can be used by the system are not limited thereto.

The database 140 may be interconnected or in communication with the server 130 or a portion thereof via the network 120, directly with server 130, or via a combination thereof.

In some embodiments, the database 140 may be a stand-alone device. In other embodiments, the database 140 may also be integrated in at least one of the vehicle 110 and the server 130. For example, the database 140 may be provided on the vehicle 110 or on the server 130. As another example, the database 140 may also be distributed, with one portion disposed on the vehicle 110 and another portion disposed on the server 130.

Fig. 2 shows a flowchart of a traffic marker detection method according to an embodiment of the present disclosure. The method 200 shown in Fig. 2 may be performed by using the server 130 shown in Fig. 1.

As shown in Fig. 2, a traffic marker detection method 200 according to some embodiments of the present disclosure comprises:
Step S210, acquiring a target image containing a traffic marker; and
Step S220, inputting the target image into a traffic marker detection model to obtain a detection mark corresponding to the traffic marker; wherein the detection mark comprises at least one of a detection point and a detection line for characterizing a position of the traffic marker in the target image.

According to one or more embodiments of the present disclosure, by inputting a target image containing a traffic marker to a traffic marker detection model, a detection point or detection line corresponding to the traffic marker is obtained, so that the detection of the traffic marker on a road can be achieved regardless of the form in which the traffic marker appears and regardless of how far away from an image acquisition device on a vehicle to acquire the target image.

In the related art, in detecting a traffic marker on a road, a rectangular box surrounding the traffic marker is used to characterize the position of the traffic marker in an image. When the image contains multiple traffic markers on the road, it is often impossible to clearly characterize each traffic marker, so the detection of traffic markers is limited.

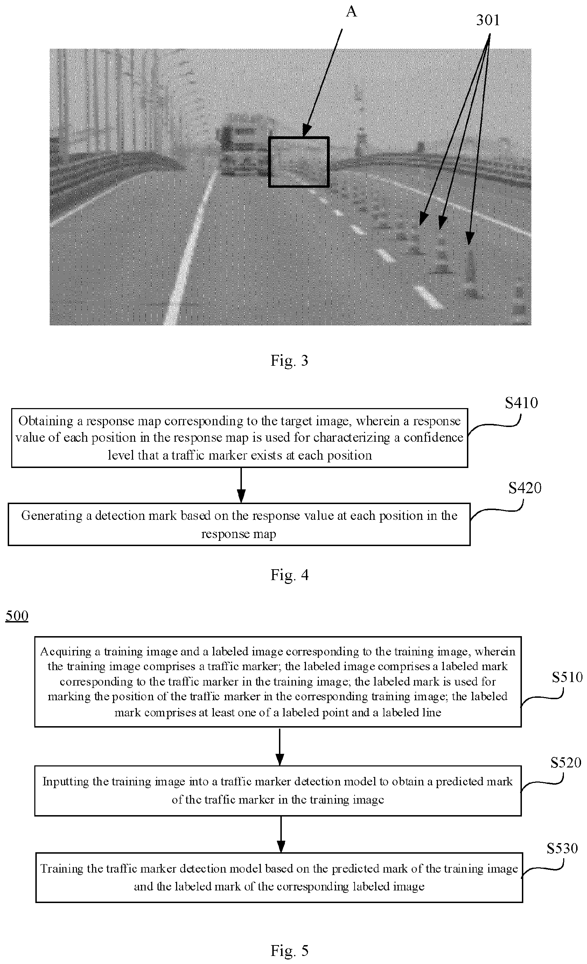

Fig. 3 is a schematic diagram of an image containing a traffic marker according to some embodiments. Here, Fig. 3 is an image of a plurality of traffic cones, such as traffic cones 301, placed along the extending direction of a road and acquired by a vehicle-mounted camera device of a vehicle running on the road. The image of the plurality of traffic cones 301 located far away from the vehicle in the image is often obscured or blurred from each other due to the near-large-far-small imaging feature of the image acquired by the camera device (as shown in box A in Fig. 3). At this time, a rectangular frame surrounding the traffic cone 301 is used to characterize the position of the traffic cone 301 in the graph, so that for a plurality of traffic cones 301 located far away from the vehicle, a plurality of detection boxes corresponding thereto overlap and cannot be distinguished or characterized using the detection boxes. Thus the traffic cones 301 located far away cannot be distinguished and the detection is limited. In an embodiment according to the present disclosure, the traffic cone 301 may be characterized by detection points and/or detection lines, in particular may be fully characterized as detection points, may be fitted as detection lines, or may be characterized by a combination of detection points and detection lines. For example, a detection point characterization may be employed for a traffic cone 301 that is closer to the distance measurement, and a detection line characterization may be employed for a plurality of traffic cones 301 that are further away from the vehicle, such that a characterization of all traffic cones in the image and, in turn, a detection of all traffic cones in the image may be achieved.

It should be understood that the example illustrated in Fig. 3, which comprises a plurality of traffic cones disposed along a direction along which a road extends, illustrates that the characterization of the plurality of traffic cones further away from an image acquisition device on a vehicle may be achieved in accordance with the methods of the present disclosure, which is merely exemplary. Those skilled in the art will appreciate that the characterization of traffic markers, and thus the detection of traffic markers, may be achieved in accordance with the methods of the present disclosure for any form of placement of traffic markers (e.g. across a road, on both sides of a road, etc.).

Also, it should be understood that the embodiment is merely exemplary to use a detection point characterization for each traffic cone 301 closer to the vehicle in Fig. 3 and a detection line characterization for a plurality of traffic cones 301 further away from the vehicle. It will be understood by those skilled in the art that the method according to the present disclosure may also be characterized using the detection point or using the same detection line for the plurality of traffic cones 301 in Fig. 3.

For example, in some embodiments, each traffic cone 301 in Fig. 3 is characterized by a detection point. Visually, the detection points of a distantly dense plurality of traffic cones 301 may approximate a line. In other embodiments, it is further possible to connect the detection points of distantly dense traffic cones 301 into a detection line. In other embodiments, the traffic cones 301 are further characterized in the form of a fitted line by clustering and fitting the detection points of the traffic cones 301 to generate the fitted line.

In some embodiments, the traffic markers comprise multiple types of traffic sign elements, which may comprise, for example, a traffic cone, a water horse, a utility pole, a lane line, or a tree on both sides of a road, and the like, without limitation.

In some embodiments, multiple traffic sign elements of the same type are included in the target image, including, for example, a plurality of traffic cones placed along the direction in which the road extends, a plurality of water horses placed across the road, etc.

In some embodiments, the traffic marker comprises a plurality of first traffic sign elements, a pixel distance between any two adjacent first traffic sign elements of the plurality of first traffic sign elements is greater than or equal to a preset threshold value, and the detection mark comprises a detection point corresponding to each of the first traffic sign elements. Here, the pixel distance may be a pixel distance between center points of the first traffic sign elements, or a pixel distance between vertices of the same position, or a distance between adjacent left and right boundaries of two adjacent first traffic sign elements.

With regard to the plurality of first traffic sign elements, since a pixel distance between adjacent first traffic sign elements is greater than or equal to a preset threshold value, each of the plurality of first traffic sign elements can be clearly distinguished in the target image. By using a detection point mark for each first traffic sign element, the position of the first traffic sign element represented by the detection point in the target image is accurate, clear and can be distinguished, facilitating the vehicle to adjust a driving path according to the first traffic sign element marked by the detection point.

In some embodiments, the traffic marker comprises a plurality of second traffic sign elements, a pixel distance between any two adjacent second traffic sign elements of the plurality of second traffic sign elements is less than a preset threshold value, and the labeled mark comprises detection lines corresponding to the plurality of second traffic sign elements. Similarly, the pixel distance may be a pixel distance between center points of the first traffic sign elements, or a pixel distance between vertices of the same position, or a distance between adjacent left and right boundaries of two adjacent first traffic sign elements.

With regard to a plurality of second traffic sign elements, since the pixel distance between adjacent second traffic sign elements is less than the preset threshold value, an overlap may occur in the target image and they cannot be clearly distinguished. The detection line is used for marking, so that the second traffic sign elements overlapping in the target image can still be characterized, and the position of the second traffic sign elements characterized by the detection line in the target image is accurate, clear and can be distinguished, which is beneficial for a vehicle to pre-judge a driving path to be adjusted according to the second traffic sign elements marked by the detection points.

In one example, the traffic sign element is a traffic cone, and the plurality of traffic cones are disposed along the direction of road extension such that a plurality of first traffic sign elements and a plurality of second traffic sign elements in the target traffic marker in the target image correspond to a plurality of first traffic cones and a plurality of second traffic cones, respectively. Here, the plurality of first traffic cones are located on a side of the target image close to the image acquisition device for acquiring the target image, and the plurality of second traffic cones are located on a side of the target image far from the image acquisition device. Therefore, for a plurality of first traffic cones, a pixel distance between any two adjacent traffic cones is greater than or equal to a preset threshold value. For a plurality of second traffic cones, the pixel distance between any two adjacent traffic cones is less than the preset threshold value. In an embodiment according to the present disclosure, each of a plurality of first traffic cones is marked with a detection point and a plurality of second traffic cones is marked with a detection line, resulting in a detection mark including both the detection point and the detection line.

It should be understood that the above examples have been described by way of example with respect to the detection mark including the detection point and the detection line, which is merely exemplary. That those skilled in the art will understand that a detection mark including only a detection point, only a detection line, a combination of a detection point and a detection box, or a combination of a detection line, a detection point and a detection box, etc. are applicable to embodiments of the present disclosure. In other embodiments, the detection mark may further comprise a detection surface, i.e. a plane representing the traffic marker.

Meanwhile, it should be understood that the above-mentioned example using a traffic cone as a traffic sign element is merely exemplary to illustrate that a plurality of first traffic sign elements and a plurality of second traffic sign elements are detected to obtain corresponding detection points and detection lines. A person skilled in the art would understand that the plurality of first traffic sign elements and the plurality of second traffic sign elements may be the same type of traffic sign elements or may be different types of traffic sign elements. Each first traffic sign element in the plurality of first traffic sign elements may be the same type of traffic sign element or may be a different type of traffic sign element, and each second traffic sign element in the plurality of second traffic sign elements may be the same type of traffic sign element or may be a different type of traffic sign element, which are all applicable to the embodiments of the present disclosure. For example, the first plurality of traffic markers comprises a plurality of traffic cones and a plurality of utility poles, the second plurality of traffic markers comprises a plurality of traffic cones and a plurality of water horses, etc.

In some embodiments, the target image is obtained by an image acquisition device on a vehicle, and the detection mark is located on a side of the traffic marker close to the vehicle. Further, the detection mark is located at an apex angular position of the traffic marker closest to the vehicle. For example, assuming that the vehicle on which the image acquisition device is located is positioned on the left side of the traffic marker, if the vehicle is traveling backward, the detection mark may be located on the lower left side of the traffic marker. If the vehicle is traveling forward, the detection mark may be located on the upper left side of the traffic marker, so that it is convenient to calculate the closest distance between the vehicle and the traffic marker according to the detection mark so as to avoid collision.

Based on the target image obtained by the image acquisition device on the vehicle, a detection mark on a side close to the vehicle is obtained, so that the vehicle travel path can be adjusted based on the detection mark, for example, to avoid the detection mark.

In some embodiments, as shown in Fig. 4, Step S220, inputting the target image into a traffic marker detection model to obtain a detection mark corresponding to the traffic marker comprises:
Step S410, obtaining a response map corresponding to the target image, wherein a response value of each position in the response map is used for characterizing a confidence level that a traffic marker exists at each position; and
Step S420, generating a detection mark based on the response value at each position in the response map.

In some embodiments, the response map corresponds to the target image. The response map may correspond to the pixel size of the target image on a one-to-one basis, or may be a zoom map in which the target image is scaled according to a predetermined scale, as long as corresponding points in the response map can be found according to pixel points in the target image, and the present disclosure is not limited thereto. The response map has a plurality of positions and each position has a response map.

In some embodiments, the response map corresponds to a region in the target image where the traffic markers are located. For example, the response map appears on the target image in the region where the traffic markers are located. Further, the response map corresponds to a region in the target image where the detection marks of the traffic marker are located. For example, if the detection marks of the traffic marker are at the lower left corner of the traffic marker, the response map mainly shows response values at a predetermined range of the lower left corner.

In some embodiments, the generating a detection mark based on the response value at each position in the response map comprises: performing a sliding window operation with a pre-set sliding window area in the response map, and if a response value of a target point of the sliding window area satisfies a predetermined condition, generating a detection mark at the target point of the sliding window area; wherein the predetermined condition is that the response value of the target point of the sliding window area is greater than or equal to a preset threshold value and is a local maximum value of the sliding window area.

Since the response value of each position of the response map represents the confidence level of the presence of a traffic marker at each position, the local maximum value greater than or equal to a threshold value of the sliding window area is taken as a target point for generating a detection mark, namely, generating a detection mark at the position within the sliding window area with the maximum confidence level of the presence of the traffic marker, so that the generated detection mark is accurate.

Note that the term "local maximum value" of the present disclosure refers to a maximum response value among the response values of each position of the response map in the sliding window area.

In some embodiments, the traffic marker comprises a plurality of types of traffic sign elements, and wherein the response map comprises a plurality of sub-response maps corresponding to the plurality of types of traffic sign elements, wherein a response value of each position in each of the plurality of sub-response maps is used to characterize a confidence level that a corresponding type of traffic sign element exists at each position. That is, a sub-response map corresponds to a type of traffic sign element and a response value of each position in a sub-response map is used to characterize a confidence level that a corresponding type of traffic sign element exists at a respective position.

In an embodiment according to the present disclosure, respective corresponding sub-response maps are respectively generated for a plurality of types of traffic sign elements, so that detection marks of the various types of traffic sign elements can be generated from the corresponding sub-response maps to make the generated detection marks accurate.

For example, the traffic marker comprises two types of traffic sign elements of a traffic cone and a water horse, and the generated response maps comprise a first sub-response map corresponding to the traffic cone and a second sub-response map corresponding to the water horse. The detection mark corresponding to the traffic cone can be generated according to the first sub-response map, and the detection mark corresponding to the water horse can be generated according to the second sub-response map so as to make the generated detection mark accurate.

In some embodiments, the detection mark comprises multiple types of detection mark identifications, and Step S320, the generating a detection mark based on the response value at each position in the response map comprises:

For each of the plurality of sub-response maps, generating a corresponding type of detection mark identification for the corresponding type of traffic sign element based on the response value for each position in the sub-response map.

For each type of traffic sign element of the multiple types of traffic sign elements, a detection mark identification of the corresponding type is generated according to the corresponding sub-response map, so that the traffic sign element of the corresponding type can be identified according to the detection mark identification, and then the vehicle travel path can be adjusted according to the traffic sign element of the corresponding type.

In some embodiments, multiple types of detection mark identification may be different color types of detection marks, such as red detection points and detection lines, green detection points and detection lines, and blue detection points and detection lines.

For example, for a traffic cone and a water horse in a traffic marker, a red detection line and a green detection line are respectively generated as respective detection mark identifications, so that the traffic sign element in the traffic marker can be obtained as the traffic cone according to the red detection line, and the traffic sign element in the traffic marker can be obtained as the water horse according to the green detection line.

In some embodiments, multiple types of detection mark identifications may be identified with multiple shapes of detection marks, such as circular detection points, diamond detection points, triangular detection points, and the like.

In some embodiments, multiple types of detection mark identifications may be detection mark identifications by a combination of multiple color types and multiple shapes.

According to another aspect of the present disclosure, there is also provided a training method for a traffic marker detection model. It should be understood that the model structure, parameters and super-parameters of the traffic marker detection model can be set by a person skilled in the art on his own initiative according to needs. The structure and parameters of the network model of the present disclosure are not particularly limited as long as corresponding response maps and detection marks can be output based on an input target image. For example, the traffic marker detection model may comprise a Convolutional Neural Network and a marker detection module. The Convolutional Neural Network may be in the form of a network structure such as UNet (U-shaped network)/HRNet (high resolution network) so as to generate a response map corresponding to the target image, and the marker detection module is used for outputting a final detection mark according to the response map. The structures and parameters of these two subnetworks can also be set by a person skilled in the art on his own initiative according to needs, and the present disclosure does not limit this.

Referring to Fig. 5, a training method 500 for a traffic marker detection model according to some embodiments of the present disclosure comprises:
Step S510, acquiring a training image and a labeled image corresponding to the training image, wherein the training image comprises a traffic marker; the labeled image comprises a labeled mark corresponding to the traffic marker in the training image; the labeled mark is used for marking the position of the traffic marker in the corresponding training image; the labeled mark comprises at least one of a labeled point and a labeled line;
Step S520, inputting the training image into a traffic marker detection model to obtain a predicted mark of the traffic marker in the training image; and
Step S530, training the traffic marker detection model based on the predicted mark of the training image and the labeled mark of the corresponding labeled image.

The position of the traffic marker in the training image is marked by a labeled mark including at least one of a labeled point and a labeled line, so that the detection mark output by the traffic marker detection model trained according to the training image and used to characterize the position of the traffic marker is at least one of a point or a line, so that the detection of the traffic marker can be realized by the traffic marker detection model trained regardless of the form of the traffic marker on the road and regardless of the distance from the imaging device used to acquire the target image on the vehicle.

In some embodiments, the traffic markers comprise multiple types of traffic sign elements, which may comprise, for example, a traffic cone, a water horse, a utility pole, a lane line, or a tree on both sides of a road, and the like, without limitation.

In some embodiments, the traffic marker comprises a plurality of first traffic sign elements, a pixel distance between any two adjacent ones of the plurality of first traffic sign elements is greater than or equal to a preset pixel distance, and the labeled mark comprises a labeled point corresponding to each of the first traffic sign elements.

With regard to the plurality of first traffic sign elements, since a pixel distance between adjacent first traffic sign elements is greater than or equal to a preset threshold value, each of the plurality of first traffic sign elements can be clearly distinguished in the target image. Each first traffic sign element is marked with a labeled point, so that the position of the first traffic sign element characterized by the labeled point is accurate in the training image, and the position of the first traffic sign element in the training image can be accurately obtained according to the traffic marker detection model trained by the labeled image including the labeled mark.

In some embodiments, the traffic marker comprises a plurality of second traffic sign elements, a pixel distance between any two adjacent ones of the plurality of second traffic sign elements is less than a preset pixel distance, and the labeled mark comprises labeled lines corresponding to the plurality of second traffic sign elements.

With regard to a plurality of second traffic sign elements, since the pixel distance between adjacent second traffic sign elements is less than a preset threshold value, an overlap may occur in a training image and they cannot be clearly distinguished; a labeled line is used for marking, so that the second traffic sign elements in the training image which are overlapped can still be characterized, and the position of the second traffic sign elements characterized by the labeled line in the training image is accurate, so that the position of the second traffic sign elements in the training image can be accurately obtained according to the traffic marker detection model trained by the labeled image including the labeled mark.

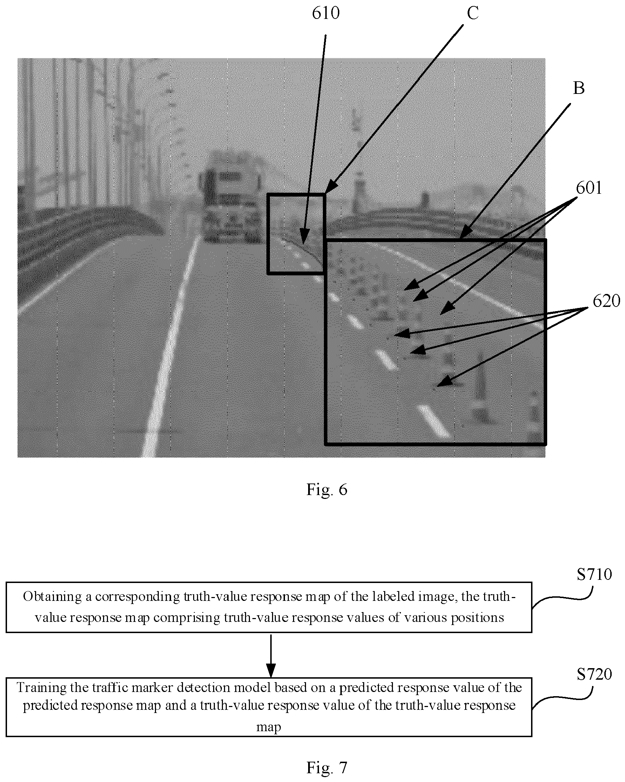

In one example, as shown in Fig. 6, the traffic marker in the training image obtained by the vehicle-mounted camera comprises a plurality of traffic cones 601, and the plurality of traffic cones are disposed along the road extending direction such that the training traffic marker comprised in the training image comprises a plurality of first traffic cones (as shown in block C in Fig. 6) and a plurality of second traffic cones (as shown in block B in Fig. 6). Here, the plurality of first traffic cones are located on a side of the training image close to the image acquisition device for acquiring the training image, and the plurality of second traffic cones are located on a side of the training image far from the image acquisition device. Therefore, for a plurality of first traffic cones, a pixel distance between any two adjacent traffic cones is greater than or equal to a preset threshold value. For a plurality of second traffic cones, the pixel distance between any two adjacent traffic cones is less than the preset threshold value. In an embodiment according to the present disclosure, as shown in Fig. 6, each of a plurality of first traffic cones is marked with a labeled point 620, and each of a plurality of second traffic cones is marked with a labeled line 610, resulting in a labeled mark that comprises both the labeled point 610 and the labeled line 620.

It should be noted that the marking of traffic markers by the labeled marks including both the labeled point and the labeled line in the present embodiment is merely exemplary, and the traffic markers may be marked only by the labeled points or only by the labeled lines.

In some embodiments, Step S520, the inputting the training image into a traffic marker detection model to obtain a predicted mark of the traffic marker in the training image comprises: obtaining by the traffic marker detection model a predicted response map corresponding to the training image based on the training image, wherein the predicted response map comprises predicted response values of various positions, and wherein, as shown in Fig. 7, in Step S530, the training the traffic marker detection model based on the predicted mark of the training image and the labeled mark of the labeled image comprises:
Step S710, obtaining a corresponding truth-value response map of the labeled image, the truth-value response map comprising truth-value response values of various positions; and
Step S720, training the traffic marker detection model based on a predicted response value of the predicted response map and a truth-value response value of the truth-value response map. The truth-value response value is a response value deemed as truth-value, the truth-value response map is a response map deemed as truth-value.

A traffic marker detection model is trained by a predicted response map of a training image and a truth-value response map of an labeled image output by the traffic marker detection model. Since the predicted response value of each position in the predicted response map characterizes a confidence level that a traffic marker exists at each position, and the truth-value response value of each position in the truth-value response map characterizes a confidence level that a traffic marker exists at each position, the traffic marker detection model is trained based on the predicted response value of the predicted response map and the truth-value response value of the truth-value response map, so that the trained traffic marker detection model can output a predicted response map corresponding to the truth-value response map; then, the predicted marks are obtained according to the predicted response map, and the traffic marker detection model is trained.

In some embodiments, in the truth-value response map, the truth-value response value for each position within a predetermined range of the labeled mark (e.g. within a predetermined range of m pixels) exhibits a predetermined distribution (e.g. a Gaussian distribution, although not limited thereto) such that the truth-value response value for a first position corresponding to the position of the labeled mark is greater than the truth-value response value for a second position different from the first position.

For example, in the process of acquiring a truth-value response map, a truth-value response value of a first position in the labeled image corresponding to the position where the labeled mark is located is set as 1. According to the distance to the first position, a truth-value response value of a position located near the first position is set as a corresponding numerical value less than 1. Specifically, a truth-value response value of a second position where the distance to the first position is less than or equal to a first distance S is set as 0.8, and a truth-value response value of a third position where the distance to the first position is less than or equal to 2S (twice the first distance) is set as 0.6, and so on, until the response value of a sixth position where the distance to the first position exceeds 5S (five times the first distance) is set to 0.

In some embodiments, in the truth-value response map, the truth-value response value at the labeled mark is a first value, and the truth-value response value at a non-labeled mark is a second value different from the first value.

For example, during the acquiring the truth-value response map, the truth-value response value at a first position in the labeled image corresponding to the position where the labeled mark is located is set to 1, and the truth-value response value at other positions in the labeled image (other than the position where the labeled mark is located) is set to 0.

In some embodiments, the traffic marker comprises a plurality of types of traffic sign elements, and wherein the obtaining a corresponding truth-value response map of the labeled image comprises: acquiring a plurality of truth-value sub-response maps corresponding to the plurality of types of traffic sign elements, wherein, for each truth-value sub-response map of the plurality of truth-value sub-response maps, a truth-value response value of each position in the truth-value sub-response map is used to characterize a confidence level that a corresponding type of traffic sign element exists at each position.

For multiple types of traffic sign elements, the truth value sub-response maps corresponding to the various types of traffic sign elements are respectively acquired, so that for each type of traffic sign element in the multiple types of traffic sign elements, a corresponding detection mark identification of the corresponding type of traffic sign element can be generated based on the corresponding truth value sub-response map thereof, and the traffic sign element of the corresponding type can be obtained according to the corresponding detection mark identification.

In some embodiments, the training image is obtained by an image acquisition device (such as cameras) on a vehicle, and the labeled mark is located on a side of the traffic marker adjacent to the vehicle or adjacent to the image acquisition device. That is to say, the the labeled mark is located on a side of the traffic marker adjacent to the point of sight of the image.

Based on the training image obtained by the image acquisition device on the vehicle, the output of the trained traffic marker detection model is positioned on the side of the image adjacent to the vehicle, so that the vehicle travel path can be adjusted based on the detection mark, for example, to avoid the detection mark.

According to another aspect of the present disclosure, there is also provided a traffic marker detection device.

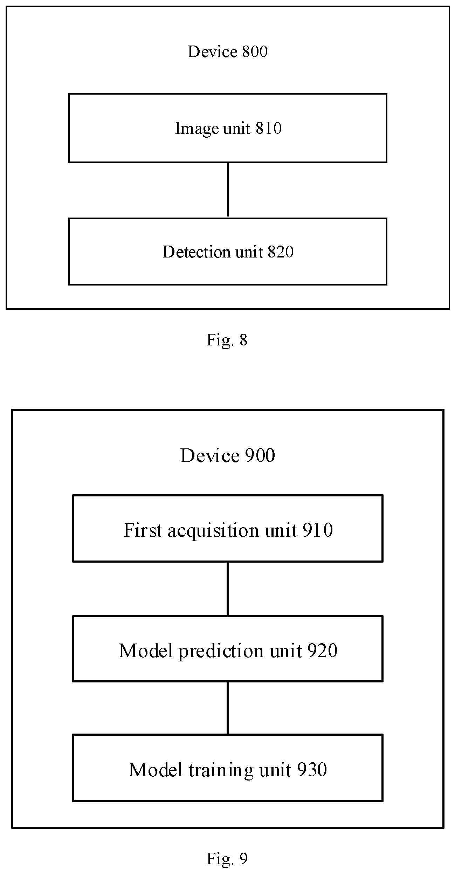

Referring to Fig. 8, a traffic marker detection device 800 according to some embodiments of the present disclosure comprises: an image acquisition unit 810 configured for acquiring a target image containing a traffic marker; and a detection unit 820 configured for inputting the target image into a traffic marker detection model to obtain a detection mark corresponding to the traffic marker; wherein the detection mark comprises a detection point for characterizing a position of the traffic marker in the target image, and the detection mark comprises at least one of the detection point and a detection line.

Here, the operations of the above-described units 810 to 820 of the traffic marker detection device 800 are similar to the operations of the above-described steps S210 to S220, respectively, and will not be described in detail herein.

According to another aspect of the present disclosure, there is also provided a device for training a traffic marker detection model.

Referring to Fig. 9, a device 900 for training a traffic marker detection model in real-time according to some of the present disclosure comprises:
a first acquisition unit 910 configured for acquiring a training image and a labeled image corresponding to the training image, wherein the training image comprises a traffic marker, the labeled image comprises a labeled mark corresponding to the traffic marker in the training image, the labeled mark is used for marking the position of the traffic marker in the corresponding training image, and the labeled mark comprises at least one of a labeled point and a labeled line; a model prediction unit 920 configured for inputting the training image into a traffic marker detection model to obtain a predicted mark corresponding to the traffic marker in the training image; and a model training unit 930 configured for training the traffic marker detection model based on the predicted mark of the training image and the labeled mark of the corresponding labeled image.

Here, the operations of the above-described units 910 to 930 of the device 900 for training a traffic marker detection model are similar to the operations of the above-described steps S510 to S530, respectively, and will not be described again.

According to another aspect of the present disclosure, there is also provided an electronic apparatus including: at least one processor; and at least one storage storing instructions that, when executed by the at least one processor, cause the at least one processor to perform the method as described above.

According to another aspect of the present disclosure there is also provided a non-transitory computer-readable storage medium storing computer instructions, wherein the computer instructions are used for enabling the computer to perform the method as described above.

According to another aspect of the present disclosure, there is also provided a computer program product including a computer program, wherein the computer program when executed by a processor implements the method as described above.

According to another aspect of the present disclosure, there is also provided a vehicle including an electronic apparatus as described above.

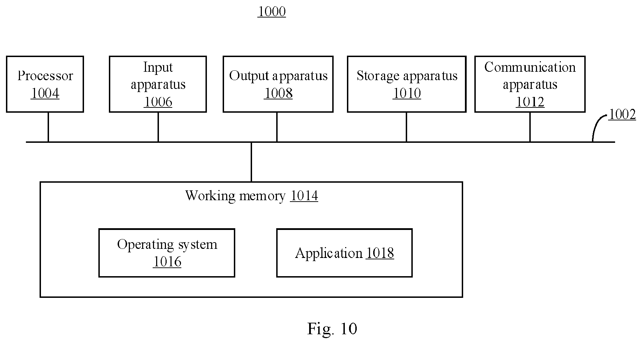

Referring to Fig. 10, an electronic apparatus 1000, which is an example of a hardware device that may be applied to aspects of the present disclosure, will now be described. The electronic apparatus 1000 may be any machine configured to perform processing and/or computing, and may be, but is not limited to, a workstation, a server, a desktop computer, a laptop computer, a tablet computer, a personal digital assistant, a smart phone, a vehicle-mounted computer, or any combination thereof. The above-described traffic data visualization device may be implemented in whole or at least in part by the electronic apparatus 1000 or a similar device or system.

The electronic apparatus 1000 may comprise elements coupled to or in communication with a bus 1002, possibly via one or more interfaces. For example, the electronic apparatus 1000 may comprise a bus 1002, one or more processors 1004, one or more input apparatuses 1006, and one or more output apparatuses 1008. The one or more processors 1004 may be any type of processor and may comprise, but are not limited to, one or more general-purpose processors and/or one or more special-purpose processors (e.g. special processing chips). The input apparatus 1006 may be any type of apparatus capable of inputting information to the electronic apparatus 1000 and may comprise, but is not limited to, a mouse, a keyboard, a touch screen, a microphone, and/or a remote control. The output apparatus 1008 may be any type of apparatus capable of presenting information and may comprise, but is not limited to, a display, a loudspeaker, a video/audio output terminal, a vibrator, and/or a printer. The electronic apparatus 1000 may also comprise or be connected to a non-transitory storage apparatus 1010, which may be any storage apparatus that is non-transitory and that may enable storage of data. It may comprise, but is not limited to, a magnetic disk drive, an optical storage apparatus, a solid state memory, a floppy disk, a flexible disk, a hard disk, a magnetic tape, or any other magnetic medium, an optical disk, or any other optical medium, a Read-Only Memory (ROM), a Random Access Memory (RAM), a cache memory and/or any other storage chip or box, and/or any other medium from which a computer can read data, instructions and/or code. The non-transitory storage apparatus 1010 may be removable from the interface. The non-transitory storage apparatus 1010 may have data/programs (including instructions)/code for implementing the methods and steps described above. The electronic apparatus 1000 may also comprise a communication apparatus 1012. The communication apparatus 1012 may be any type of apparatus or system that enables communication with external devices and/or with a network, and may comprise, but is not limited to, a modem, a network card, an infrared communication apparatus, a wireless communication apparatus, and/or a chipset, such as a Bluetooth^{™} device, a 1302.11 device, a WiFi device, a WiMax device, a cellular communication apparatus, and/or the like.

The electronic apparatus 1000 may also comprise a working memory 1014, which may be any type of working memory that may store programs (including instructions) and/or data useful for the operation of the processor 1004 and may comprise, but is not limited to, a Random Access Memory and/or a Read-Only Memory apparatuses.

The software elements (programs) may be located in the working memory 1014, including, but not limited to, an operating system 1016, one or more application programs 1018, a drive program, and/or other data and code. The instructions for performing the above-described methods and steps may be comprised in one or more application programs 1018, and the above-described traffic data visualization device may be implemented by the instructions of the one or more application programs 1018 being read and executed by the processor 1004. Executable code or source code for the instructions of the software elements (programs) may be stored in a non-transitory computer-readable storage medium, such as the storage apparatus 1010 described above, and when executed may be stored in the working memory 1014 (possibly compiled and/or installed). The executable code or source code for the instructions of the software elements (programs) may also be downloaded from a remote position.

It will also be appreciated that various modifications may be made in accordance with specific requirements. For example, custom hardware may also be used, and/or particular elements may be implemented in hardware, software, firmware, middleware, microcode, a hardware description language, or any combination thereof. For example, some or all of the disclosed methods and apparatuses may be implemented by programming the hardware (e.g. programmable logic circuits including field programmable gate arrays (FPGA) and/or programmable logic arrays (PLA)) in an assembly language or a hardware programming language (such as VERILOG, VHDL, C++) by using logic and algorithms according to the present disclosure.

It should also be understood that the foregoing method may be implemented in a server-client mode. For example, a client may receive data input by a user and send the data to a server. The client may also receive data input by the user, perform some of the processing in the aforementioned method, and send the data resulting from the processing to the server. The server may receive the data from the client, perform the aforementioned method or another part of the aforementioned method, and return the results of the execution to the client. The client may receive the results of the execution of the method from the server and may, for example, be presented to the user via an output apparatus.

It should also be understood that the components of the electronic apparatus 1000 may be distributed in a network. For example, some processes may be performed using one processor while other processes may be performed by another processor remote from the one processor. Other components of the computing system 1000 may also be similarly distributed. As such, the electronic apparatus 1000 may be interpreted as a distributed computing system that performs processing at multiple positions.

Although embodiments or examples of the present disclosure have been described with reference to the accompanying drawings, it should be understood that the above-described methods, systems and devices are merely exemplary embodiments or examples, and that the scope of the present invention is not limited by these embodiments or examples, but is defined only by the appended claims and their equivalents. Various elements of the embodiments or examples may be omitted or replaced with equivalents thereof. Furthermore, the steps may be performed in an order other than that described in this disclosure. Further, various elements of the embodiments or examples may be combined in various ways. Importantly, as technology evolves, many of the elements described herein can be replaced with equivalent elements that emerge from this disclosure.

## Claims

1. A traffic marker detection method, comprising:
acquiring a target image containing a traffic marker; and
inputting the target image into a traffic marker detection model to obtain a detection mark corresponding to the traffic marker;
wherein the detection mark comprises at least one of a detection point and a detection line for characterizing a position of the traffic marker in the target image.

2. The method of claim 1, wherein the inputting the target image into the traffic marker detection model to obtain the detection mark corresponding to the traffic marker comprises:
obtaining a response map corresponding to the target image, wherein the response has a plurality of positions and a response value of each position in the response map is used for characterizing a confidence level that the traffic marker exists at the corresponding position; and
generating the detection mark based on the response values in the response map.

3. The method of claim 2, wherein generating the detection mark based on the response values in the response map comprises:
performing a sliding window operation in the response map;
in response to the response value of a target position of the response map in a sliding window area satisfies a predetermined condition, generating the detection mark at the target point of the sliding window area;
wherein the predetermined condition is that the response value of the target position of the sliding window area is greater than or equal to a preset threshold value and is a local maximum value of the sliding window area.

4. The method of claim 2 or 3, wherein the traffic marker comprises a plurality of types of traffic sign elements, and the obtaining the response map corresponding to the target image comprises: obtaining a plurality of sub-response maps corresponding to the plurality of types of traffic sign elements, wherein the response value of each position in each of the plurality of sub-response maps is used to characterize the confidence level that a corresponding type of traffic sign element exists at the corresponding position.

5. The method of claim 4, wherein the detection mark comprises a plurality of types of identifications, and the generating the detection mark based on the response value in the response map comprises:
for each of the plurality of sub-response maps, generating a corresponding type of identification for the corresponding type of traffic sign element based on the response values in the sub-response map.

6. The method of any of claims 1-5, wherein the target image is obtained by an image acquisition device on a vehicle, and the detection mark is located on a side of the traffic marker adjacent to the image acquisition device.

7. A training method for a traffic marker detection model, comprising:
acquiring a training image and a labeled image corresponding to the training image, wherein the training image comprises a traffic marker; the labeled image comprises a labeled mark corresponding to the traffic marker in the training image; the labeled mark is used for marking the position of the traffic marker in the corresponding training image; the labeled mark comprises at least one of a labeled point and a labeled line;
inputting the training image into a traffic marker detection model to obtain a predicted mark of the traffic marker in the training image; and
training the traffic marker detection model based on the predicted mark of the training image and the labeled mark of the corresponding labeled image.

8. The method of claim 7, wherein the traffic marker comprises a plurality of first traffic sign elements, a pixel distance between any two adjacent first traffic sign elements of the plurality of first traffic sign elements is greater than or equal to a preset pixel distance, and the labeled mark comprises a labeled point corresponding to each first traffic sign element.

9. The method of claim 7 or 8, wherein the traffic marker comprises a plurality of second traffic sign elements, a pixel distance between any two adjacent second traffic sign elements of the plurality of second traffic sign elements is less than a preset pixel distance, and the labeled mark comprises labeled lines corresponding to the plurality of second traffic sign elements.

10. The method of claim 7, wherein
the inputting the training image into the traffic marker detection model to obtain the predicted mark of the traffic marker in the training image comprises:
obtaining by the traffic marker detection model a predicted response map corresponding to the training image, wherein the predicted response map comprises predicted response values of various positions; and wherein
training the traffic marker detection model based on the predicted mark of the training image and the labeled mark of the labeled image comprises:
obtaining a truth-value response map of the labeled image, the truth-value response map comprising truth-value response values of various positions; and
training the traffic marker detection model based on the predicted response value of the predicted response map and the truth-value response value of the truth-value response map.

11. The method of claim 10, wherein, in the truth-value response map,
the truth-value response value at each position within the predetermined range of the labeled mark exhibits a predetermined distribution; alternatively,
the truth-value response value at the labeled mark is a first value, and the truth-value response value at a non-labeled mark is a second value different from the first value.

12. The method of claim 10, wherein the traffic marker comprises a plurality of types of traffic sign elements, and wherein the obtaining the truth-value response map corresponding to the labeled image comprises:
obtaining a plurality of truth-value sub-response maps corresponding to the plurality of types of traffic sign elements, wherein, for each truth-value sub-response map of the plurality of truth-value sub-response maps, the truth-value response value of each position in the truth-value sub-response map is used to characterize a confidence level that a corresponding type of traffic sign element exists at a respective position.

13. The method of claim 7, wherein the training image is obtained by an image acquisition device on a vehicle, and the labeled mark is located on a side of the traffic marker adjacent to the image acquisition device.

14. An electronic apparatus, comprising:
at least one processor; and
at least one storage storing instructions that, when executed by the at least one processor, cause the at least one processor to perform a method of any of claims 1-13.

15. A non-transitory computer-readable storage medium storing computer instructions, wherein the computer instructions are used for enabling the computer to perform a method of any of claims 1-13.
